# EUROPÄISCHE PATENTANMELDUNG

(11) **EP 2 768 103 A1**
(43) Veröffentlichungstag der Anmeldung: **20.08.2014**
(21) Anmeldenummer: 14154922.0
(22) Anmeldetag: 12.02.2014
(51) Int. Cl.: H02H 3/06, H02H 3/093, H02H 3/08

(54) **Elektrische Überstromsicherung ohne externe Spannungsversorgung**

(30) Priorität: 14.02.2013 DE 102013101466
(71) Anmelder: Murrelektronik GmbH, 71570 Oppenweiler (DE)
(72) Erfinder: Rödiger, Jonny, 71540 Murrhardt (DE)
(74) Vertreter: Prinz & Partner

(57) **Zusammenfassung**

Eine Überstromschutzvorrichtung (10) mit zwei Anschlüssen (12, 14) zum Schutz einer Schaltung ist vorgesehen, wobei die Überstromschutzvorrichtung (10) in einer stromführenden Leitung (16) der Schaltung angeordnet ist. Die Überstromschutzvorrichtung (10) weist einen Schalttransistor (18), insbesondere einen Feldeffekttransistor, der den Leitungsstrom schaltet, eine Steuerelektronik (22), die einen RS Flip-Flop (34) umfasst und den Schalttransistor (18) steuert, ein einstellbares Widerstandselement (26) und einen Komparator (20) mit zwei Eingängen (28, 30) und einem Ausgang (32) auf. Die Steuerelektronik (22) steuert im Überstromfall den Schalttransistor (18) derart an, dass der Schalttransistor (18) im Überstromfall schaltet, sodass kein Strom durch die stromführende Leitung (16) fließt. Bei Abklingen des Überstroms oder bei Unterbrechung der Spannungsversorgung steuert die Steuerelektronik (22) den Schalttransistor (18) derart, dass er stromleitend ist, womit sich die Überstromschutzvorrichtung (10) selbsttätig zurücksetzt.

## Beschreibung

Die Erfindung betrifft eine Überstromschutzvorrichtung mit zwei Anschlüssen zum Schutz einer Schaltung.

Überstromschutzvorrichtungen sind aus dem Stand der Technik im Allgemeinen bekannt. Sie werden dazu verwendet, eine Schaltungsanordnung in einem Gerät vor einem Überstrom zu schützen, sodass Beschädigungen oder gar die Zerstörung des Geräts vermieden wird. Überstromschutzvorrichtungen können dabei in verschiedenster Form ausgeführt sein. Eine Alternative ist es, die Überstromschutzvorrichtung als Schmelzsicherung auszuführen, die bei einem Überstrom schmilzt und den Stromkreis wirkungsvoll unterbricht, sodass das Gerät geschützt ist. Diese Form einer Überstromschutzvorrichtung ist einfach zu handhaben und zudem sehr einfach zu installieren. Nachteilig bei dieser Ausführungsform ist jedoch, dass die Schmelzsicherung ein Einwegteil ist und somit nach dem Auslösen gewechselt werden muss.

Alternativ werden Überstromschutzvorrichtungen als Schaltungen ausgeführt, die im Falle eines Überstroms ein Schaltelement derart schalten, dass dieses den Stromfluss durch die stromführende Leitung unterbricht. Dadurch ist das Gerät, das an der stromführenden Leitung angeschlossen ist, wirkungsvoll vor dem Überstrom geschützt. Solche Überstromschutzvorrichtungen werden auch als elektronische Sicherungen oder elektrische Überstromsicherungen bezeichnet, sofern das Schaltelement durch ein elektronisches Bauteil, vorzugsweise durch einen Transistor, ausgebildet ist. Die elektrischen Überstromsicherungen grenzen sich von den Schmelzsicherungen zudem dadurch ab, dass sie besonders schnell schalten und wiederverwendbar sind.

Elektronische Sicherungen haben jedoch den Nachteil, dass sie typischerweise eine externe Stromversorgung benötigen, die entweder über eine Batterie oder durch Anklemmen der Überstromschutzvorrichtung an die Betriebsspannung des zu schützenden Geräts verwirklicht wird. Dies stellt einen hohen Installationsaufwand dar.

Des Weiteren weisen elektronische Sicherungen den Nachteil auf, dass diese zumeist über einen separaten Schalter zurückgestellt werden müssen, wenn der Überstrom abgeklungen ist. Ein Bediener bzw. Betreiber einer von der Überstromschutzvorrichtung geschützten Anlage bzw. Schaltung muss demnach nach Abklingen des Überstroms die Überstromschutzvorrichtung manuell zurückstellen, damit die von der Überstromschutzsicherung geschützte Anlage wieder betrieben werden kann.

Aufgabe der Erfindung ist es, eine Überstromschutzvorrichtung zu schaffen, die einfach zu installieren und zudem wiederverwendbar ist.

Diese Aufgabe wird erfindungsgemäß gelöst durch eine Überstromschutzvorrichtung mit zwei Anschlüssen zum Schutz einer Schaltung, wobei die Überstromschutzvorrichtung in einer stromführenden Leitung der Schaltung vorgesehen ist und wobei die Überstromschutzvorrichtung einen Schalttransistor, insbesondere einen Feldeffekttransistor, der den Leitungsstrom schaltet, eine Steuerelektronik, die einen RS Flip-Flop umfasst und den Schalttransistor steuert, ein einstellbares Widerstandselement, das parallel zum Schalttransistor angeordnet ist, und einen Komparator mit zwei Eingängen und einem Ausgang aufweist, wobei die Steuerelektronik im Überstromfall den Schalttransistor derart ansteuert, dass der Schalttransistor im Überstromfall schaltet, sodass kein Strom durch die stromführende Leitung fließt, und wobei bei Abklingen des Überstroms oder Trennen der Spannungsversorgung die Steuerelektronik den Schalttransistor derart steuert, dass er stromleitend ist und somit die Überstromschutzvorrichtung sich selbsttätig zurücksetzt.

Der Grundgedanke der Erfindung ist dabei, dass durch die erfindungsgemäße Anordnung der einzelnen Schaltungsbauteile eine Überstromschutzvorrichtung geschaffen wird, die unabhängig von einer externen Spannungsversorgung die Schaltung vor einem Überstrom schützt und nach Abklingen des Überstroms oder nach Entfernen des Kurzschlusses sich selbsttätig in einen stromleitenden Zustand zurücksetzt. Dies bedeutet, dass das Entfernen der Betriebsspannung der Überstromschutzvorrichtung ausreicht, damit sich die Überstromschutzvorrichtung zurücksetzt. Das Drücken eines Reset-Knopfes oder Umlegen eines Schalters an der Überstromschutzvorrichtung ist nicht nötig. Zudem ist die erfindungsgemäße Überstromschutzvorrichtung sehr einfach zu installieren und dazu umweltfreundlich, da die Überstromschutzvorrichtung nicht mit einer Spannungsquelle verbunden werden muss bzw. keine Batterien verwendet werden, die entsorgt werden müssen. Selbsttätig zurücksetzen bedeutet, dass keine externe Spannungsquelle vorgesehen ist, die als Referenzspannung zum Zurücksetzen und/oder Auslösen der Überstromschutzvorrichtung nötig ist.

Vorzugsweise ist vorgesehen, dass die Steuerelektronik drei Schaltelemente, insbesondere drei Transistoren, aufweist, wobei zwei der Schaltelemente dem S-Eingang des RS Flip-Flops zugeordnet sind. Die Schaltelemente dienen zur Steuerung der Überstromschutzvorrichtung, wobei diese dem zentralen Steuerelement, nämlich der Steuerelektronik, zugeordnet sind. Die dem S-Eingang des RS Flip-Flops zugeordneten Schaltelemente dienen zur Steuerung des RS Flip-Flops.

Insbesondere ist vorgesehen, dass eins der drei Schaltelemente dem Ausgang des Komparators zugeordnet ist. Damit ist gewährleistet, dass der Komparator eins der Schaltelemente über seinen Ausgang steuern kann, wodurch der Komparator die Steuerelektronik beeinflussen bzw. steuern kann. Vorzugsweise handelt es sich bei dem Schaltelement, das dem Ausgang des Komparators zugeordnet ist, um eins der beiden Schaltelemente, die dem S-Eingang des RS Flip-Flops zugeordnet sind. Somit kann der Komparator über das Schaltelement das RS Flip-Flop steuern.

In einer bevorzugten Ausführungsform ist vorgesehen, dass eins der drei Schaltelemente, der Steuertransistor, dem Ausgang des RS Flip-Flops zugeordnet ist. Dieses Schaltelement dient zur Steuerung des Schalttransistors und damit der gesamten Überstromschutzvorrichtung. Das Schaltelement ist von der Stellung des RS Flip-Flops abhängig, wodurch die Steuerelektronik über dieses Schaltelement die Überstromschutzvorrichtung steuern kann.

In einer besonders bevorzugten Ausführungsform ist vorgesehen, dass die Steuerelektronik einen Kondensator aufweist, der dem R-Eingang des RS Flip-Flops zugeordnet ist. Der Kondensator wird dazu benötigt, das RS Flip-Flop während der Einschaltphase zu definieren. Der Kondensator verzögert den Spannungsaufbau entsprechend, wodurch das RS Flip-Flop in einen definierten Zustand gesetzt wird.

Insbesondere ist ein Schaltregler vorgesehen, der im eingeschalteten Zustand die Spannungsversorgung der Steuerelektronik übernimmt. Der Schaltregler gewährleistet, dass die Überstromschutzvorrichtung, insbesondere die Steuerelektronik, eine Betriebsspannung hat, wodurch diese aktiv betrieben werden kann. Somit ist eine externe Spannungsversorgung für die Überstromschutzvorrichtung nicht nötig.

Insbesondere sind die Eingänge des Komparators mit der den Schalttransistor aufweisenden Leitung und dem einstellbaren Widerstandselement verbunden, wobei der Überstrom durch Vergleich der Eingangssignale am Komparator detektiert wird. Der Komparator vergleicht somit den Leistungsabfall in der den Schalttransistor aufweisenden Leitung mit demjenigen, der an dem einstellbaren Widerstandselement vorgesehen ist, wobei ein Überschreiten dazu führt, dass der Komparator ein entsprechendes Ausgangssignal generiert.

Vorzugsweise ist der Schalttransistor ein Feldeffekttransistor des Anreicherungstyps. Dies bedeutet, dass der Schalttransistor im Normalfall nichtleitend ist und der Schalttransistor durch Anlegen einer Spannung zwischen dem Gate- und dem Sourceanschluss leitend wird.

In einer besonders bevorzugten Ausführungsform ist vorgesehen, dass das Gate des als Feldeffekttransistor ausgeführten Schalttransistors mit dem Kollektor des als Bipolartransistor ausgeführten Steuertransistors verbunden ist, sodass die Steuerelektronik den Schalttransistor über den Steuertransistor steuern kann. Dies ermöglicht, dass die Steuerelektronik den Schalttransistor direkt über den Steuertransistor steuern kann, wodurch eine kompakte Bauweise der Überstromschutzvorrichtung ermöglicht wird.

Insbesondere sind zwei Gatter vorgesehen, die vor dem Gate des Schalttransistors zur Flankenversteilerung angeordnet sind. Dies gewährleistet, dass der Schalttransistor schnell schalten kann und nicht über seinen Arbeitspunkt fährt.

In einer bevorzugten Ausführungsform ist das einstellbare Widerstandselement ein Potentiometer, über dessen Widerstand der Auslösestrom der Überstromschutzvorrichtung einstellbar ist. Mittels des Potentiometers kann somit der Referenzwert für den Komparator eingestellt werden, bei dem der Komparator die Steuerelektronik mit einem entsprechenden Signal beaufschlagt, welches dem Überstromfall entspricht. Dadurch ist sichergestellt, dass die erfindungsgemäße Überstromschutzvorrichtung für mehrere Strombereiche verwendet werden kann, wobei der Auslösestrom, der die schützende Funktion der Schaltung aktiviert, über das Potentiometer einstellbar ist.

Eine LED kann vorgesehen sein, die dann bestromt ist, wenn der Schalttransistor geöffnet ist. Die LED dient als optisches Signal für einen Betreiber, um diesem anzuzeigen, dass die Überstromschutzvorrichtung ausgelöst hat und die Schaltung vor einem Überstrom schützt. Vorzugsweise handelt es sich bei der LED dabei um eine rote LED, da die Farbe Rot typischerweise für das Vorliegen eines Problems verwendet wird.

Insbesondere sind keine Widerstandskomponenten in Reihenschaltung mit dem Schalttransistor vorgesehen. Dies hat den Vorteil, dass als Referenzwert für den Komparator lediglich die Spannung dient, die an der den Schalttransistor aufweisenden Leitung selbst abfällt und nicht über andere seriell angeordnete Widerstandskomponenten.

Weitere Merkmale und Vorteile der Erfindung ergeben sich aus der nachfolgenden Beschreibung und aus der nachfolgenden Zeichnung, auf die Bezug genommen wird.

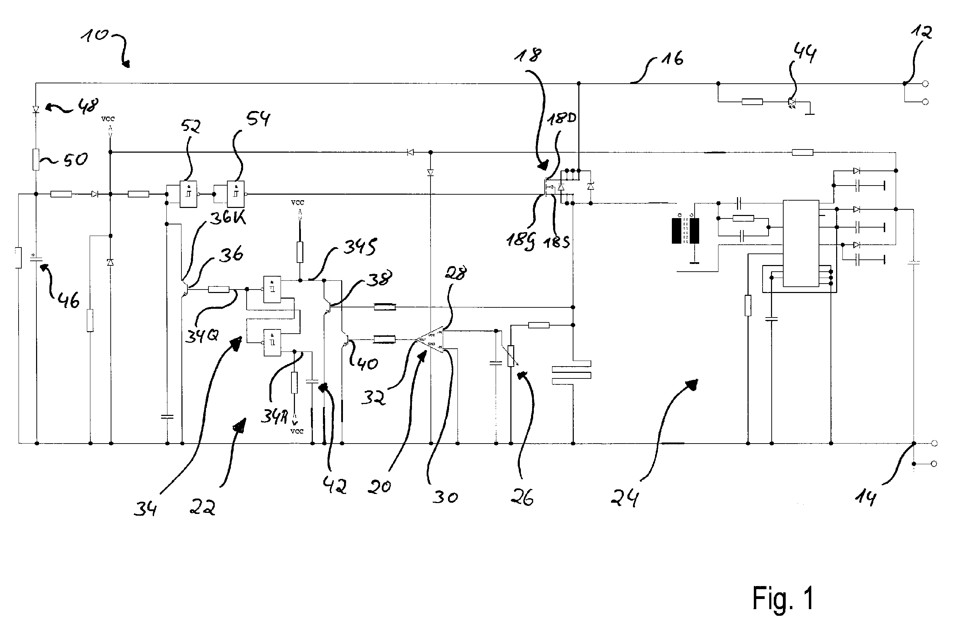

Figur 1 zeigt einen Schaltplan einer erfindungsgemäßen Überstromschutzvorrichtung 10, die über einen ersten Anschluss 12 und einen zweiten Anschluss 14 in einer stromführenden Leitung 16 angeordnet ist. Die Überstromschutzvorrichtung 10 schützt dabei eine hier nicht dargestellte, stromabwärts des Anschlusses 14 befindliche Schaltung vor einem Überstrom. Die Überstromschutzvorrichtung 10 weist als zentrale Bauteile einen als Feldeffekttransistor ausgeführten Schalttransistor 18, einen Komparator 20, eine Steuerelektronik 22, einen Schaltregler 24 sowie ein einstellbares Widerstandselement 26 auf.

Der Schalttransistor 18 verfügt demnach über einen Sourceanschluss 18S, einen Gateanschluss 18G und einen Drainanschluss 18D. Der Schalttransistor 18 ist dabei in der stromführenden Leitung 16 angeordnet und schaltet bei einem Überstrom, sodass der Stromfluss in der stromführenden Leitung 16 unterbrochen wird, wodurch die stromabwärts des zweiten Anschlusses 14 angeordnete Schaltung geschützt wird.

Ein möglicher Überstrom während des Betriebs wird dabei vom Komparator 20 erkannt, der einen ersten Eingang 28, einen zweiten Eingang 30 sowie einen Ausgang 32 aufweist. Der erste Eingang 28 des Komparators 20 ist dabei dem einstellbaren Widerstandselement 26 zugeordnet. Über dieses einstellbare Widerstandselement 26 kann die Referenzspannung für den Komparator 20 eingestellt werden, wobei ein Schwellwert definiert wird. Der zweite Eingang 30 des Komparators 20 erfasst den Leistungsabfall in der stromführenden Leitung 16 und vergleicht diesen mit dem Leistungsabfall, der an dem einstellbaren Widerstandselement 26 vorliegt. Wird der über das einstellbare Widerstandselement 26 zuvor eingestellte Schwellwert überschritten, so wird über den Ausgang 32 des Komparators 20 ein entsprechendes Signal ausgesendet. Der Ausgang 32 ist direkt mit der Steuerelektronik 22 verbunden.

Die Steuerelektronik 22 weist ein RS Flip-Flop 34, das einen R-Eingang 34R, einen S-Eingang 34S sowie einen Ausgang 34Q aufweist, sowie drei Schaltelemente 36, 38, 40 und einen Kondensator 42 auf. Die genaue Funktionsweise wird im weiteren Verlauf erklärt.

Zudem ist eine LED 44 vorgesehen, die ein optisches Signal ausgibt, sodass einem Benutzer der Überstromschutzvorrichtung 10 optisch angezeigt wird, wenn sich die Überstromschutzvorrichtung 10 in einem ausgelösten, das heißt in einem die stromführende Leitung 16 unterbrechenden Zustand befindet. Die LED 44 ist dazu vorzugsweise als rote LED ausgeführt.

Die Überstromschutzvorrichtung 10 funktioniert wie folgt:
Die Überstromschutzvorrichtung 10 wird in der stromführenden Leitung 16 zwischen den beiden Anschlüssen 12 und 14 eingebracht, wodurch eine Schaltung, die stromabwärts des Anschlusses 14 angeordnet ist, vor einem Überstrom geschützt wird.

Im Einschaltmoment existieren zunächst undefinierte Zustände. Dies erfordert, dass das RS Flip-Flop 34 zunächst in einen definierten Zustand überführt wird, sodass generell ein definierter Zustand für die Überstromschutzvorrichtung 10 hergestellt wird. Dazu gibt es eine Einschaltsequenz, wobei zunächst ein Kondensator 46, der vorzugsweise ein Elektrolytkondensator ist, über eine Diode 48 und nachgeschalteten Widerstand 50 aufgeladen wird. Dadurch wird die Betriebsspannung für das RS Flip-Flop 34 generiert. Das RS Flip-Flop 34 wird des Weiteren über den Kondensator 42, der dem R-Eingang 34R des RS Flip-Flops 34 zugeordnet ist, in einen definierten Zustand überführt. Dazu zieht der Kondensator 42 den R-Eingang 34R kurzzeitig nach Masse, womit das RS Flip-Flop 34 einen definierten Zustand annimmt. Während dieser Einschaltsequenz befinden sich die Schaltelemente 38, 40, die dem S-Eingang 34S des RS Flip-Flops 34 zugeordnet sind, in einem nichtleitenden Zustand. Dadurch befindet sich der S-Eingang 34S ebenfalls auf Massepotenzial, wodurch das RS Flip-Flop 34 generell auf low steht. Das Schaltelement 36, das dem Ausgang 34Q des RS Flip-Flops 34 zugeordnet ist, wird somit in einem nichtleitenden Zustand gehalten. Das Schaltelement 36 wird auch als Steuerelement bzw. Steuertransistor bezeichnet. Da sich der Steuertransistor 36 in einem nichtleitenden Zustand befindet, wird der Eingang zu dem Gateanschluss 18G des Schalttransistors 18 freigegeben, wodurch der Schalttransistor 18 leitend wird. Zwischen dem Steuertransistor 36, insbesondere dem Kollektoranschluss 36K des Steuertransistors 36, und dem Gateanschluss 18G des Schalttransistors 18 sind zwei Gatter 52, 54 derart angeordnet, dass der Schalttransistor 18 schneller schaltet. Die beiden Gatter 52, 54 dienen demnach der Flankenversteilerung.

Der Schalttransistor 18 befindet sich nun im leitenden Zustand. Zwischen den beiden Anschlüssen 12 und 14 beträgt die Spannung nahezu 0 V. In diesem Moment gibt es nun zwei Möglichkeiten, wobei die erste Möglichkeit einen Kurzschluss betrifft und die zweite Möglichkeit den Normalbetrieb darstellt, der sich dadurch auszeichnet, dass sich der Strom in einem Normbereich bewegt.

Sollte ein Kurzschluss im Einschaltmoment vorliegen, so wird der Spannungsabfall über den Leiterzugwiderstand derart groß, dass das Schaltelement 38, vorzugsweise ein Bipolartransistor, der sich am S-Eingang 34S des RS Flip-Flops befindet, schaltet. Dadurch kippt das RS Flip-Flop 34 entsprechend, wodurch am Ausgang 34Q ein High-Signal ausgegeben wird, welches den Steuertransistor 36 in einen leitenden Zustand versetzt. Dadurch wird der Schalttransistor 18 sofort über die zur Flankenversteilerung dienenden Gatter 52, 54 abgeschaltet, wodurch der Stromfluss durch die stromführende Leitung 16 entsprechend unterbrochen wird. Ist dies der Fall, so leuchtet die LED 44 entsprechend und zeigt dem Betreiber der Anlage an, dass ein Kurzschluss vorliegt.

Liegt der Strom durch die stromführende Leitung 16 im Normbereich und wird über den Leiterzugwiderstand ein Spannungsabfall von mindestens 23 mV generiert, so reichen diese 23 mV dem Schaltregler 24 aus, um daraus eine Spannung von 3 V zu erzeugen. Dies führt dazu, dass sich der Kondensator 46, der sich während der Einschaltsequenz aufgeladen hat, über einen Widerstand 56 entsprechend entladen kann, wobei die Spannungsversorgung der Steuerelektronik 22 von dem Schaltregler 24 übernommen wird.

Die Überstromschutzvorrichtung 10 befindet sich demnach in einem stromführenden Zustand, wobei die Betriebsspannung für die Steuerelektronik 22 selbst generiert wird.

Steigt der Strom nun während des Betriebs über die Abschaltgrenze, die über das einstellbare Widerstandselement 26 eingestellt werden kann, so reagiert der Komparator 20. Der Komparator 20 vergleicht die Eingangssignale, die an seinen beiden Eingängen 28, 30 anliegen, wobei am Eingang 28 das einstellbare Widerstandselement 26 angeordnet ist, wodurch dies einen entsprechenden Schwellwert definiert. Wird das Signal an dem zweiten Eingang 30 derart hoch, dass der über das einstellbare Widerstandselement 26 definierte Schwellwert überschritten wird, so sendet der Komparator 20 über seinen Ausgang 32 ein entsprechendes Signal. Der Ausgang 32 ist direkt mit dem Schaltelement 40 der Steuerelektronik 22 verbunden, wobei dieses im Überstromfall in einen leitenden Zustand versetzt wird. Das Schaltelement 40, welches vorzugsweise ein Bipolartransistor ist, ist ebenfalls dem S-Eingang 34S des RS Flip-Flops 34 zugeordnet. Wird das Schaltelement 40 in einen leitenden Zustand überführt, so kippt das RS Flip-Flop 34, wodurch der Schalttransistor 18 entsprechend dem Kurzschlussfall in einen stromsperrenden Zustand übergeht.

Klingt der Überstrom ab, nachdem sich der Schalttransistor 18 in seinem nichtleitenden Zustand befindet, so wird dies von dem Komparator 20 erkannt, wodurch das Schaltelement 40 entsprechend in seinen nichtleitenden Zustand versetzt wird und das RS Flip-Flop 34 wieder in seinen Zustand kippt, der ein Low-Signal am Ausgang 34Q zur Folge hat. Dadurch wird der Steuertransistor 36 in seinen nichtleitenden Zustand zurückversetzt, wodurch eine Spannung zwischen dem Gateanschluss 18G und dem Sourceanschluss 18S des Schalttransistors 18 vorliegt, welche den Schalttransistor 18 in den leitenden Zustand versetzt. Dadurch kann der Strom wieder durch die stromführende Leitung 16 über den Anschluss 12 und den Schalttransistor 18 und den Anschluss 14 zu der Schaltung fließen, die vor dem Überstrom geschützt worden ist.

Es ist somit eine Überstromschutzvorrichtung 10 geschaffen, die ohne externe Spannungsversorgung ausgebildet ist und für mehrere Strombereiche geeignet ist.

## Patentansprüche

1. Überstromschutzvorrichtung (10) mit zwei Anschlüssen (12, 14) zum Schutz einer Schaltung, wobei die Überstromschutzvorrichtung (10) in einer stromführenden Leitung (16) der Schaltung vorgesehen ist und wobei die Überstromschutzvorrichtung (10) einen Schalttransistor (18), insbesondere einen Feldeffekttransistor, der den Leitungsstrom schaltet, eine Steuerelektronik (22), die einen RS Flip-Flop (34) umfasst und den Schalttransistor (18) steuert, ein einstellbares Widerstandselement (26) und einen Komparator (20) mit zwei Eingängen (28, 30) und einem Ausgang (32) aufweist, wobei die Steuerelektronik (22) im Überstromfall den Schalttransistor (18) derart ansteuert, dass der Schalttransistor (18) im Überstromfall schaltet, sodass kein Strom durch die stromführende Leitung (16) fließt, und wobei bei Abklingen des Überstroms oder Trennen der Spannungsversorgung die Steuerelektronik (22) den Schalttransistor (18) derart steuert, dass er stromleitend ist und somit die Überstromschutzvorrichtung (10) sich selbsttätig zurücksetzt.

2. Überstromschutzvorrichtung (10) nach Anspruch 1, **dadurch gekennzeichnet, dass** die Steuerelektronik (22) drei Schaltelemente (36, 38, 40), insbesondere drei Transistoren, aufweist, wobei zwei der Schaltelemente (38, 40) dem S-Eingang (34S) des RS Flip-Flops (34) zugeordnet sind.

3. Überstromschutzvorrichtung (10) nach Anspruch 2, **dadurch gekennzeichnet, dass** eins der drei Schaltelemente (40) dem Ausgang (28) des Komparators (20) zugeordnet ist.

4. Überstromschutzvorrichtung (10) nach einem der Ansprüche 2 und 3, **dadurch gekennzeichnet, dass** eins der drei Schaltelemente (36), der Steuertransistor, dem Ausgang (34Q) des RS Flip-Flops (34) zugeordnet ist.

5. Überstromschutzvorrichtung (10) nach einem der vorhergehenden Ansprüche, **dadurch gekennzeichnet, dass** die Steuerelektronik (22) einen Kondensator (42) aufweist, der dem R-Eingang (34R) des RS Flip-Flops (34) zugeordnet ist.

6. Überstromschutzvorrichtung (10) nach einem der vorhergehenden Ansprüche, **dadurch gekennzeichnet, dass** ein Schaltregler (24) vorgesehen ist, der im eingeschalteten Zustand die Spannungsversorgung der Steuerelektronik (22) übernimmt.

7. Überstromschutzvorrichtung (10) nach einem der vorhergehenden Ansprüche, **dadurch gekennzeichnet, dass** die Eingänge (28, 30) des Komparators (20) mit der den Schalttransistor (18) aufweisende Leitung und dem einstellbaren Widerstandselement (26) verbunden sind und der Überstrom durch Vergleich der Eingangssignale am Komparator (20) detektiert wird.

8. Überstromschutzvorrichtung (10) nach einem der vorhergehenden Ansprüche, **dadurch gekennzeichnet, dass** der Schalttransistor (18) ein Feldeffekttransistor des Anreicherungstyps ist.

9. Überstromschutzvorrichtung (10) nach Anspruch 8, **dadurch gekennzeichnet, dass** das Gate (18G) des als Feldeffekttransistor ausgeführten Schalttransistors (18) mit dem Kollektor (36K) des als Bipolartransistor ausgeführten Steuertransistors (36) verbunden ist, sodass die Steuerelektronik (22) den Schalttransistor (18) über den Steuertransistor (36) steuern kann.

10. Überstromschutzvorrichtung (10) nach einem der vorhergehenden Ansprüche, **dadurch gekennzeichnet, dass** zwei Gatter (52, 54) vor dem Gate (18G) des Schalttransistors (18) zur Flankenversteilerung vorgesehen sind.

11. Überstromschutzvorrichtung (10) nach einem der vorhergehenden Ansprüche, **dadurch gekennzeichnet, dass** das einstellbare Widerstandselement (26) ein Potentiometer ist, über dessen Widerstand der Auslösestrom der Überstromschutzvorrichtung (10) einstellbar ist.

12. Überstromschutzvorrichtung (10) nach einem der vorhergehenden Ansprüche, **dadurch gekennzeichnet, dass** eine LED (44) vorgesehen ist, die dann bestromt ist, wenn der Schalttransistor (18) geöffnet ist.

13. Überstromschutzvorrichtung (10) nach einem der vorhergehenden Ansprüche, **dadurch gekennzeichnet, dass** keine Widerstandskomponenten in Reihenschaltung mit dem Schalttransistor (18) vorgesehen sind.
